# EUROPEAN PATENT SPECIFICATION

(11) **EP 3 885 193 B1**
(45) Date of publication and mention of the grant of the patent: **15.06.2022**
(21) Application number: 21157854.7
(22) Date of filing: 18.02.2021
(51) Int. Cl.: B62J 6/026, B60Q 1/00, F21S 43/20

(54) **STRADDLED VEHICLE**
GRÄTSCHSITZFAHRZEUG
VÉHICULE À ENFOURCHER

(30) Priority: 25.03.2020 JP 2020054151
(43) Date of publication of application: 29.09.2021
(73) Proprietor: Yamaha Hatsudoki Kabushiki Kaisha, Iwata-shi, Shizuoka 438-8501 (JP)
(72) Inventor: SARUNYAKOOB, Kornrapat, 10540 Samutprakarn (TH); OGAWA, Takuya, 10540 Samutprakarn (TH)
(74) Representative: Grünecker Patent- und Rechtsanwälte PartG mbB

(56) References cited:
- EP-A1- 3 150 431
- WO-A1-2017/052478
- JP-A- 2017 224 445

## Description

The present invention relates to a straddled vehicle.

There is a type of straddled vehicle including a position light and a headlight. For example, PCT International Patent Application Publication No. WO2018/180352 describes that a position light is disposed in the vicinity of a headlight. The position light extends from a middle portion of a front cover to be narrowly elongated in both obliquely upward directions. The position light includes an outer lens, light guiding members, and subordinate lighting bodies. The light guiding members are disposed behind the outer lens and guide light emitted from the subordinate lighting bodies. Another straddle type vehicle with the features of the preamble of claim 1 is shown in JP 2017-224445A.

The position light, if narrowly shaped, exerts low distinguishability when disposed near the headlight as described above. However, in widely shaping the position light, the light guides are required to be widely shaped as well. This results in enlargement of light sources.

Incidentally, in recent years, light-emitting diodes (LEDs) have been used as light sources for position lights. However, the LEDs are narrow in directivity. Hence, a large number of LEDs are required when used for such an elongated position light as described above. This results in increase in cost of the LEDs. Besides, this results in expansion of a space for disposing the large number of LEDs and a board for attaching these LEDs.

It is an object of the present invention to provide a straddled vehicle that can inhibit a light source from being enlarged and increased in number, and simultaneously, to enhance distinguishability of a position light. According to the present invention said object is solved by a straddled vehicle having the features of independent claim 1. Preferred embodiments are laid down in the dependent claims.

A straddled vehicle according to an aspect of the present teaching includes a head pipe, a steering device, a front wheel, a front cover, and a headlight unit. The steering device is turnably supported by the head pipe. The front wheel is rotatably supported by the steering device. The front cover is disposed in front of the head pipe. The headlight unit is disposed in the front cover.

The headlight unit includes a headlight portion, a first position light portion, a housing, and a clear cover. The housing holds the headlight portion and the first position light portion. The clear cover is disposed in front of the headlight portion and the first position light portion. The clear cover allows light to transmit therethrough. The first position light portion is disposed above the headlight portion. The first position light portion includes a light source, a first light guide, and a first light diffuser. The first light guide is disposed behind the clear cover. The first light guide extends along a longitudinal direction of the clear cover. The first light guide guides light emitted from the light source. The first light diffuser is disposed behind the clear cover and in front of the first light guide. The first light diffuser extends along the longitudinal direction of the clear cover. The first light diffuser have a greater width than the first light guide.

In the straddled vehicle according to the present aspect, the light emitted from the light source is guided by the first light guide. Because of this, even when the first position light portion has an elongated shape, the light source can be inhibited from being increased in number. Moreover, the light emitted from the first light guide is diffused by the first light diffuser having the greater width than the first light guide. Accordingly, the light source and the first light guide can be inhibited from being enlarged, and simultaneously, the first position light portion can be enhanced in distinguishability.

The first position light portion may further include a light shading portion dividing right and left the first light diffuser. In this case, the first position light portion appears as if it were composed of a plurality of position lights. Because of this, the first position light portion can be enhanced in distinguishability.

The first position light portion may adjoin an upper edge of the headlight portion. In this case, the headlight unit can be made compact. Besides, even when the first position light portion adjoins the headlight portion, degradation in distinguishability of the first position light portion can be inhibited by both the first light guide and the first light diffuser described above.

The headlight portion may include a first headlight portion and a second headlight portion. The first headlight portion may extend leftward and obliquely upward from a middle portion of the front cover. The second headlight portion may extend rightward and obliquely upward from the middle portion of the front cover. The first position light portion may be disposed above the first headlight portion. The headlight unit may further include a second position light portion. The second position light portion may be disposed above the second headlight portion. In this case, the position light portions can be further enhanced in distinguishability by the first and second position light portions.

The second position light portion may include a second light guide and a second light diffuser. The second light guide may be disposed behind the clear cover. The second light guide may extend along the longitudinal direction of the clear cover. The second light diffuser may be disposed behind the clear cover and in front of the second light guide. The second light diffuser may extend along the longitudinal direction of the clear cover and may have a greater width than the second light guide. In this case, the light source and the second light guide can be inhibited from being enlarged, and simultaneously, the second position light portion can be enhanced in distinguishability.

The light source may be disposed between the first light guide and the second light guide. In this case, the first and second position light portions can be lit up by the light source shared therebetween. Accordingly, the light source can be further inhibited from being enlarged and increased in number.

The first headlight portion may include a first inner light and a first outer light. The first inner light may include a first inner light source. The first outer light may include a first outer light source. The first outer light may be disposed on a left side of the first inner light. The second headlight portion may include a second inner light and a second outer light. The second inner light may include a second inner light source. The second outer light may include a second outer light source. The second outer light may be disposed on a right side of the second inner light. In this case, a range of light emitted by the first and second headlight portions can be extended.

The first inner light and the second inner light may be low-beam lights. The first outer light and the second outer light may be high-beam lights.

### BRIEF DESCRIPTION OF THE DRAWINGS

FIG. 1 is a side view of a straddled vehicle according to an embodiment.
FIG. 2 is a front view of a front cover.
FIG. 3 is a front view of a headlight unit.
FIG. 4 is a top view of the headlight unit.
FIG. 5 is a front view of the headlight unit that a clear cover is detached.
FIG. 6 is a cross-sectional view of FIG. 5 taken along line VI-VI.
FIG. 7 is a cross-sectional view of FIG. 5 taken along line VII-VII.
FIG. 8 is a cross-sectional view of FIG. 5 taken along line VIII-VIII.
FIG. 9 is a front view of the headlight unit that an inner cover, a first light diffuser, and a second light diffuser are detached.
FIG. 10 is a front view of the first light diffuser and a first light guide.
FIG. 11 is a front view of the second light diffuser and a second light guide.

### DETAILED DESCRIPTION OF EMBODIMENTS

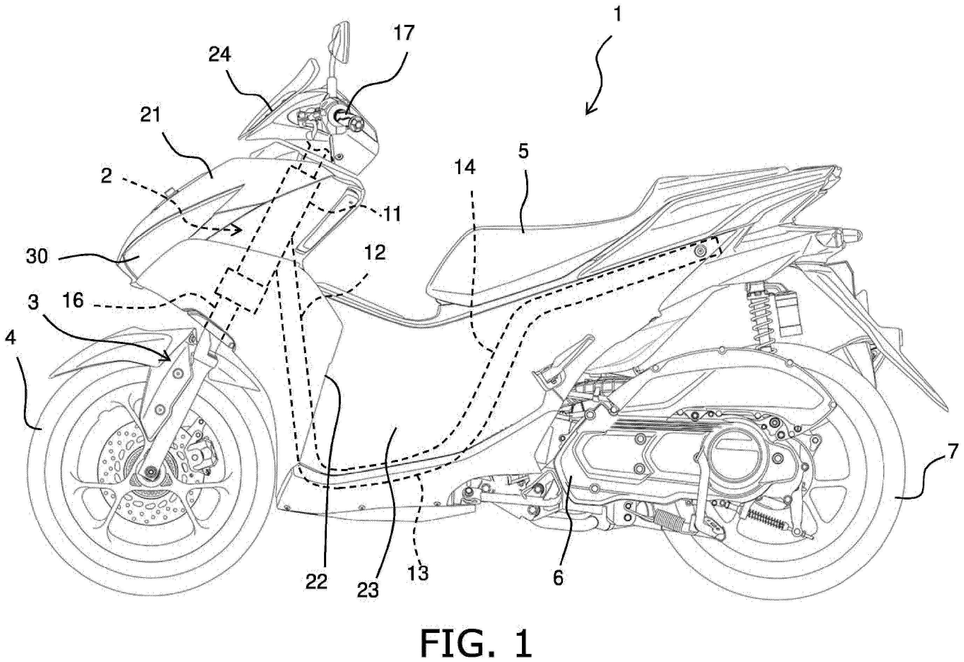

A straddled vehicle according to an embodiment of the present teaching will be hereinafter explained with reference to drawings. FIG. 1 is a side view of a straddled vehicle 1 according to the embodiment. The straddled vehicle 1 according to the present embodiment is a scooter-type vehicle. As shown in FIG. 1, the straddled vehicle 1 includes a vehicle body frame 2, a steering device 3, a front wheel 4, a seat 5, a power unit 6, and a rear wheel 7. It should be noted that in the following explanation, front and rear with regard to a front-and-rear direction of the vehicle, right and left with regard to a right-and-left direction of the vehicle, above and below with regard to an up-and-down direction of the vehicle are defined as indicating front, rear, right, left, upward and downward directions seen from a driver seated on the seat 5.

The vehicle body frame 2 includes a head pipe 11, a down frame 12, a lower frame 13 and a rear frame 14. The head pipe 11 is disposed in the middle of the vehicle in a right-and-left direction. The head pipe 11 extends forward and downward. The down frame 12 extends downward from the head pipe 11. The lower frame 13 extends backward from a lower portion of the down frame 12. The rear frame 14 extends backward and upward from a rear portion of the down frame 12.

The steering device 3 is supported by the head pipe 11 so as to be turnable. The steering device 3 supports the front wheel 4 such that the front wheel 4 is rotatable. The steering device 3 includes a front fork 16 and a handle member 17. The front fork 16 is supported by the head pipe 11 so as to be turnable. The front wheel 4 is supported by the front fork 16 so as to be rotatable. The handle member 17 can be operated by the driver in order to turn the front wheel 4. The handle member 17 extends in the right-and-left direction.

The seat 5 is disposed behind the head pipe 11. The seat 5 is disposed above the rear frame 14. The power unit 6 is disposed below the seat 5. The power unit 6 includes, for instance, an internal combustion engine. Alternatively, the power unit 6 may include an electric motor. The rear wheel 7 is supported by the power unit 6 so as to be rotatable.

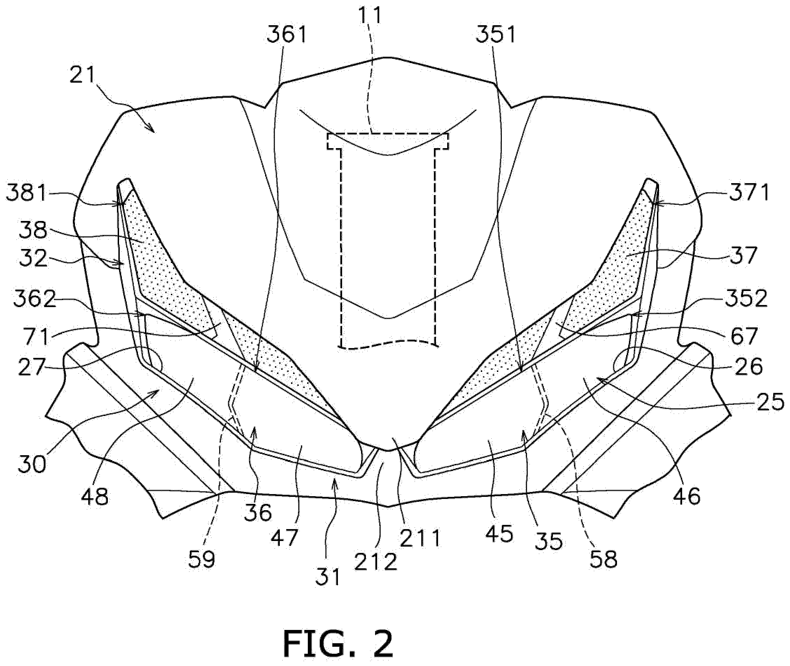

The straddled vehicle 1 includes a front cover 21, a leg shield 22, a side cover 23, and a handle cover 24. The front cover 21 is fixed to the vehicle body frame 2. The front cover 21 is disposed in front of the head pipe 11. FIG. 2 is a front view of the front cover 21. As shown in FIG. 2, the front cover 21 overlaps the head pipe 11 as seen in a vehicle front view.

As shown in FIG. 1, the leg shield 22 is disposed behind the front cover 21. The side cover 23 is disposed below the seat 5. The side cover 23 covers the rear frame 14 from lateral sides. The side cover 23 is disposed between the leg shield 22 and the seat 5.

The handle cover 24 covers part of the handle member 17. The handle cover 24 is located above the front cover 21. The handle cover 24 is located above the head pipe 11. The handle cover 24 is turnable together with the handle member 17 with respect to the front cover 21.

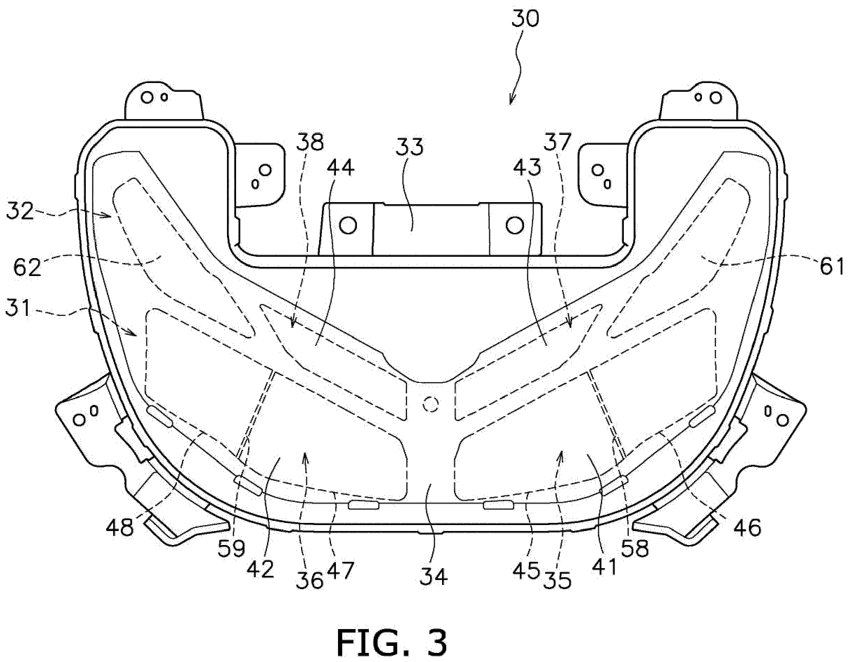

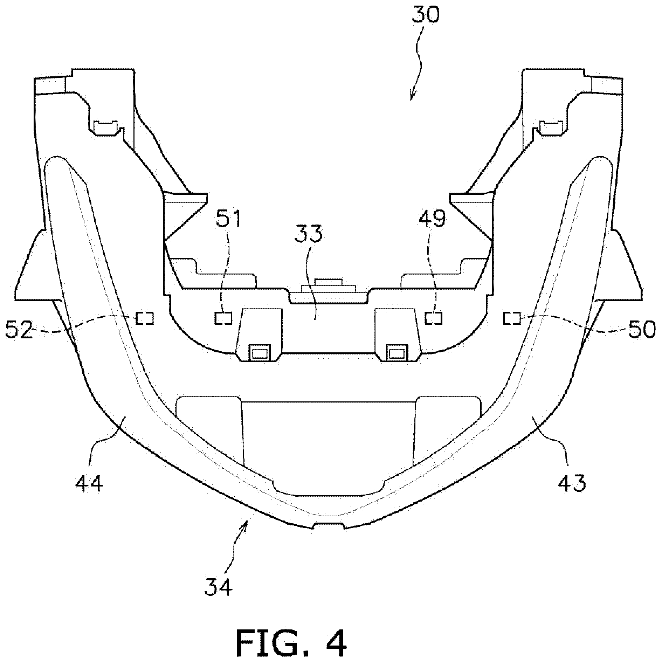

The straddled vehicle 1 includes a headlight unit 30. The headlight unit 30 is disposed in the front cover 21. FIG. 3 is a front view of the headlight unit 30. FIG. 4 is a top view of the headlight unit 30. As shown in FIGS. 2 and 3, the headlight unit 30 includes a headlight portion 31, a position light portion 32, a housing 33, and a clear cover 34. The housing 33 is disposed behind the headlight portion 31 and the position light portion 32. The housing 33 holds the headlight portion 31 and the position light portion 32. The clear cover 34 is disposed in front of the headlight portion 31 and the position light portion 32. The clear cover 34 is made of transparent material and allows light to transmit therethrough.

The headlight portion 31 includes a first headlight portion 35 and a second headlight portion 36. The first headlight portion 35 is disposed leftward of the center of the vehicle in the right-and-left direction. As seen in the vehicle front view, the first headlight portion 35 extends leftward and obliquely upward from a middle portion of the front cover 21 in the right-and-left direction. The second headlight portion 36 is disposed rightward of the center of the vehicle in the right-and-left direction. As seen in the vehicle front view, the second headlight portion 36 extends rightward and obliquely upward from the middle portion of the front cover 21 in the right-and-left direction.

The position light portion 32 is disposed above the headlight portion 31. The position light portion 32 includes a first position light portion 37 and a second position light portion 38. The first position light portion 37 is disposed above the first headlight portion 35. As shown in FIG. 2, the first position light portion 37 adjoins an upper edge 351 of the first headlight portion 35. The first position light portion 37 extends along the upper edge 351 of the first headlight portion 35. The second position light portion 38 is disposed above the second headlight portion 36. The second position light portion 38 adjoins an upper edge 361 of the second headlight portion 36. The second position light portion 38 extends along the upper edge 361 of the second headlight portion 36.

As seen in the vehicle front view, the first position light portion 37 extends to a position leftward of the first headlight portion 35. In other words, as seen in the vehicle front view, an outer lateral end 371 of the first position light portion 37 is located laterally outside an outer lateral end 352 of the first headlight portion 35. As seen in the vehicle front view, the second position light portion 38 extends to a position rightward of the second headlight portion 36. In other words, as seen in the vehicle front view, an outer lateral end 381 of the second position light portion 38 is located laterally outside an outer lateral end 362 of the second headlight portion 36.

As shown in FIG. 3, the clear cover 34 includes a first headlight cover 41, a second headlight cover 42, a first position light cover 43, and a second position light cover 44. The first headlight cover 41 is disposed in front of the first headlight portion 35. As seen in the vehicle front view, the first headlight cover 41 overlaps the first headlight portion 35. The second headlight cover 42 is disposed in front of the second headlight portion 36. As seen in the vehicle front view, the second headlight cover 42 overlaps the second headlight portion 36. The first position light cover 43 is disposed in front of the first position light portion 37. As seen in the vehicle front view, the first position light cover 43 overlaps the first position light portion 37. The second position light cover 44 is disposed in front of the second position light portion 38. As seen in the vehicle front view, the second position light cover 44 overlaps the second position light portion 38. The first headlight cover 41, the second headlight cover 42, the first position light cover 43, and the second position light cover 44 are integrally provided.

As shown in FIG. 2, the front cover 21 includes a headlight opening 25. The headlight unit 30 is exposed outside through the headlight opening 25. The headlight opening 25 includes a first opening 26 and a second opening 27. The first headlight portion 35 and the first position light portion 37 are exposed outside through the first opening 26. The second headlight portion 36 and the second position light portion 38 are exposed outside through the second opening 27. The front cover 21 includes an upper protruding portion 211 and a lower protruding portion 212. The upper protruding portion 211 protrudes downward from the upper edge of the headlight opening 25. The lower protruding portion 212 protrudes upward from the lower edge of the headlight opening 25. The upper and lower protruding portions 211 and 212 are connected to each other. As seen in the vehicle front view, the upper and lower protruding portions 211 and 212 overlap the clear cover 34. The upper and lower protruding portions 211 and 212 are located between the first and second openings 26 and 27. The upper and lower protruding portions 211 and 212 divide the headlight opening 25 into the first and second openings 26 and 27.

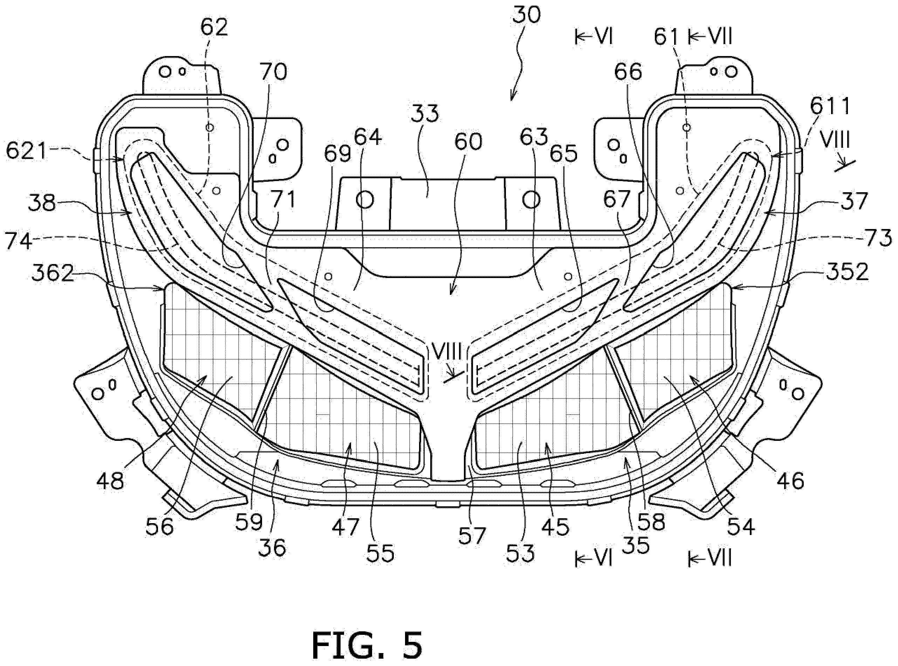

FIG. 5 is a front view of the headlight unit 30 that the clear cover 34 is detached. As shown in FIG. 5, the first headlight portion 35 includes a first inner light 45 and a first outer light 46. The first outer light 46 is disposed on the left side of the first inner light 45. The second headlight portion 36 includes a second inner light 47 and a second outer light 48. The second outer light 48 is disposed on the right side of the second inner light 47.

As shown in FIG. 4, the first inner light 45 includes a first inner light source 49. The first outer light 46 includes a first outer light source 50. The second inner light 47 includes a second inner light source 51. The second outer light 48 includes a second outer light source 52. The first and second inner light sources 49 and 51 and the first and second outer light sources 50 and 52 are, for instance, light-emitting diodes (LEDs). However, the first and second inner light sources 49 and 51 and the first and second outer light sources 50 and 52 may be light bulbs.

As shown in FIG. 5, the first inner light 45 includes a first inner reflector 53. The first inner reflector 53 reflects light emitted from the first inner light source 49. The first outer light 46 includes a first outer reflector 54. The first outer reflector 54 reflects light emitted from the first outer light source 50. The second inner light 47 includes a second inner reflector 55. The second inner reflector 55 reflects light emitted from the second inner light source 51. The second outer light 48 includes a second outer reflector 56. The second outer reflector 56 reflects light emitted from the second outer light source 52.

The first and second inner lights 45 and 47 are disposed inside the first and second outer lights 46 and 48 in the right-and-left direction of the vehicle. The first and second inner lights 45 and 47 are divided from each other through a middle partition 57. The first outer light 46 and the first inner light 45 are divided from each other through a first partition 58. The second outer light 48 and the second inner light 47 are divided from each other through a second partition 59. The first and second inner lights 45 and 47 are low-beam lights. The first and second outer lights 46 and 48 are high-beam lights. In other words, the optical axis of the first outer light source 50 is oriented more upward than that of the first inner light source 49. The optical axis of the second outer light source 52 is oriented more upward than that of the second inner light source 51.

As shown in FIG. 5, the position light portion 32 includes an inner cover 60, a first light diffuser 61, and a second light diffuser 62. The inner cover 60 and the first and second light diffusers 61 and 62 are disposed behind the clear cover 34. The inner cover 60 is disposed in front of the first and second light diffusers 61 and 62. The inner cover 60 covers part of the first and second light diffusers 61 and 62 from ahead. When described in detail, the inner cover 60 includes a first cover portion 63 and a second cover portion 64. The first and second cover portions 63 and 64 are integrally provided. As seen in the vehicle front view, the first cover portion 63 overlaps part of the first light diffuser 61. As seen in the vehicle front view, the second cover portion 64 overlaps part of the second light diffuser 62. The first cover portion 63 and the first light diffuser 61 are included in the first position light portion 37. The second cover portion 64 and the second light diffuser 62 are included in the second position light portion 38.

The first and second light diffusers 61 and 62 are separated from each other. The first light diffuser 61 extends along a longitudinal direction of the first position light cover 43. The second light diffuser 62 extends along a longitudinal direction of the second position light cover 44. As seen in the vehicle front view, the first light diffuser 61 extends leftward and obliquely upward from a middle portion of the headlight unit 30. As seen in the vehicle front view, the second light diffuser 62 extends rightward and obliquely upward from the middle portion of the headlight unit 30. The first light diffuser 61 extends to a position leftward of the first headlight portion 35. In other words, as seen in the vehicle front view, an outer lateral end 611 of the first light diffuser 61 is located laterally outside the outer lateral end 352 of the first headlight portion 35. The second light diffuser 62 extends to a position rightward of the second headlight portion 36. In other words, as seen in the vehicle front view, an outer lateral end 621 of the second light diffuser 62 is located laterally outside the outer lateral end 362 of the second headlight portion 36.

The first and second light diffusers 61 and 62 are made of, for instance, light diffusive resin. The first light diffuser 61 allows light, incident thereinto from behind, to forwardly transmit therethrough in a diffused manner. The second light diffuser 62 allows light, incident thereinto from behind, to forwardly transmit therethrough in a diffused manner.

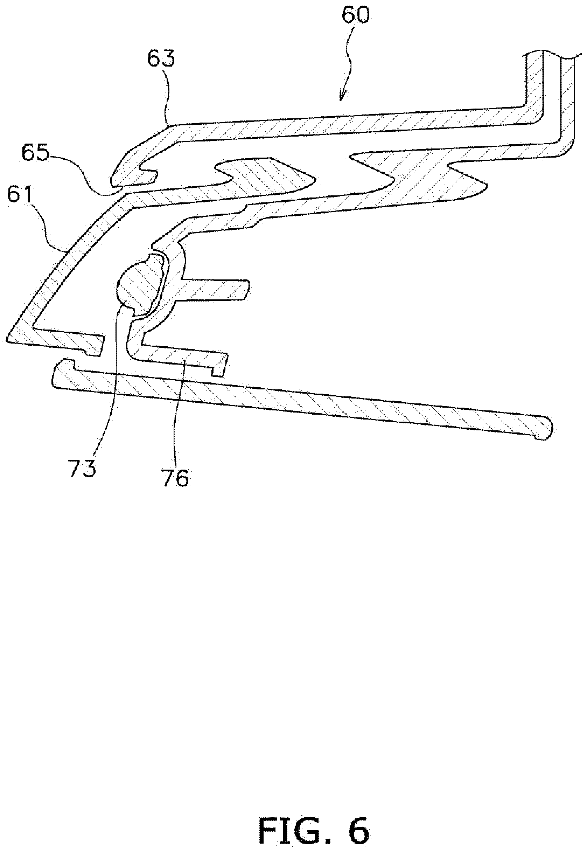

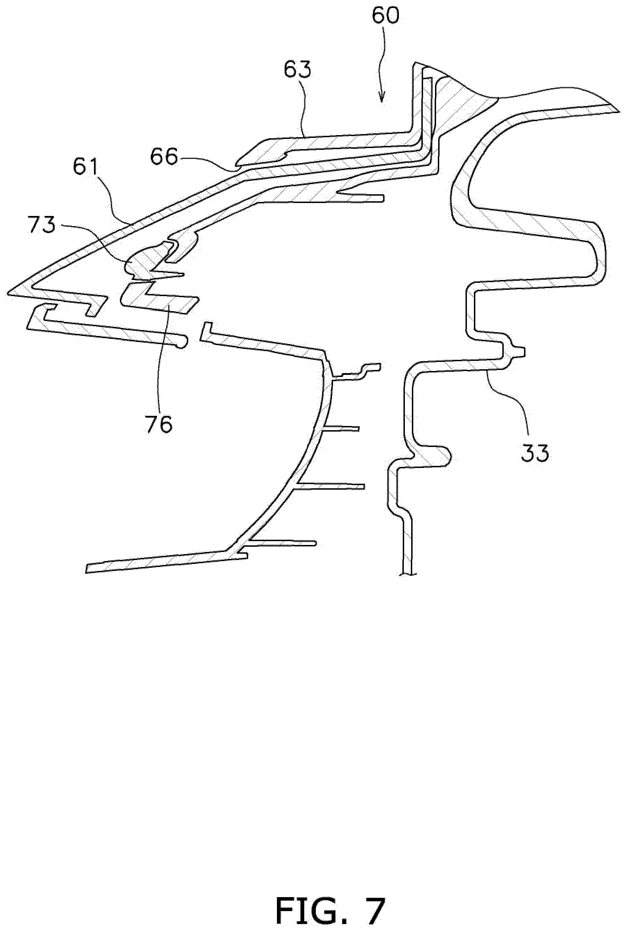

The first cover portion 63 includes a first inner opening 65, a first outer opening 66, and a first light shading portion 67. The first inner opening 65 is disposed above the first inner light 45. The first outer opening 66 is disposed on the left side of the first inner opening 65. The first outer opening 66 is disposed above the first outer light 46. FIG. 6 is a cross-sectional view of FIG. 5 taken along line VI-VI. As shown in FIG. 6, the first light diffuser 61 is forwardly exposed from the first cover portion 63 through the first inner opening 65. FIG. 7 is a cross-sectional view of FIG. 5 taken along line VII-VII. As shown in FIG. 7, the first light diffuser 61 is forwardly exposed from the first cover portion 63 through the first outer opening 66.

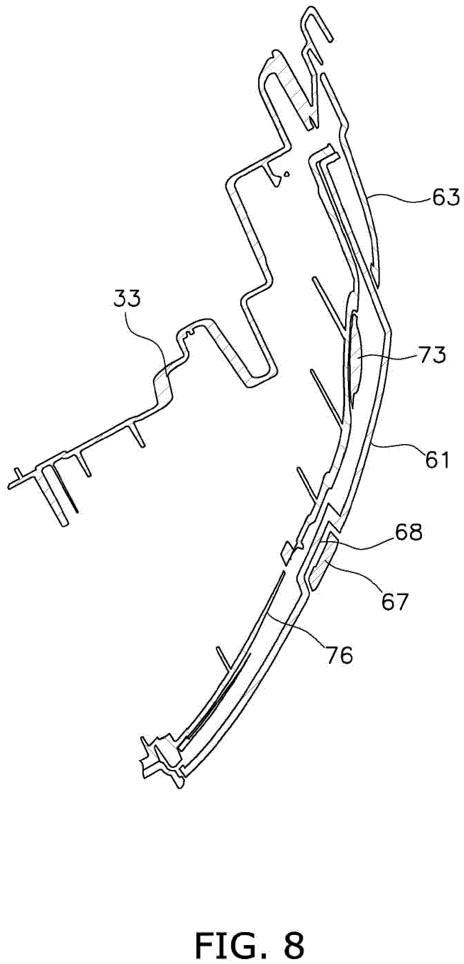

As seen in the vehicle front view, the first light shading portion 67 is disposed between the first inner opening 65 and the first outer opening 66. As seen in the vehicle front view, the first light shading portion 67 extends leftward and obliquely upward. As seen in the vehicle front view, the first light shading portion 67 overlaps the first light diffuser 61. The first light shading portion 67 divides right and left the first light diffuser 61. FIG. 8 is a cross-sectional view of FIG. 5 taken along line VIII-VIII. As shown in FIG. 8, the first light diffuser 61 includes a first recessed portion 68. The first recessed portion 68 is recessed backward from the front surface of the first light diffuser 61. The first recessed portion 68 is disposed in opposition to the first light shading portion 67. The first light shading portion 67 is at least in part disposed within the first recessed portion 68.

As shown in FIG. 5, the second cover portion 64 has a structure bilaterally symmetric to that of the first cover portion 63. The second cover portion 64 includes a second inner opening 69, a second outer opening 70, and a second light shading portion 71. The second inner opening 69 is disposed above the second inner light 47. The second outer opening 70 is disposed on the right side of the second inner opening 69. The second outer opening 70 is disposed above the second outer light 48. The second light diffuser 62 is forwardly exposed from the second cover portion 64 through the second inner opening 69. The second light diffuser 62 is forwardly exposed from the second cover portion 64 through the second outer opening 70. As seen in the vehicle front view, the second light shading portion 71 is disposed between the second inner opening 69 and the second outer opening 70. As seen in the vehicle front view, the second light shading portion 71 extends rightward and obliquely upward. As seen in the vehicle front view, the second light shading portion 71 overlaps the second light diffuser 62. The second light shading portion 71 divides right and left the second light diffuser 62.

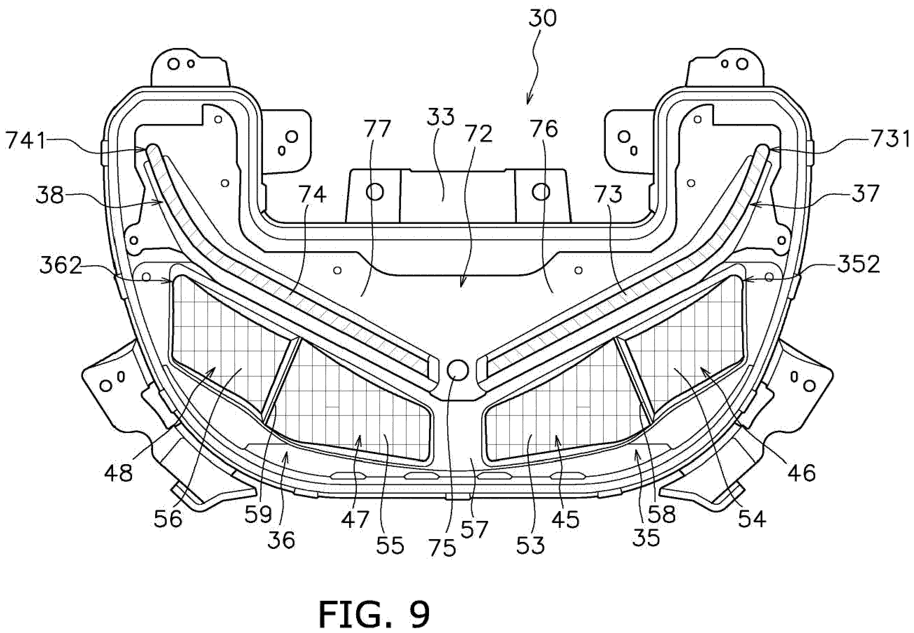

FIG. 9 is a front view of the headlight unit 30 that the inner cover 60, the first light diffuser 61, and the second light diffuser 62 are detached. As shown in FIG. 9, the position light portion 32 includes a support member 72, a first light guide 73, a second light guide 74, and a light source 75. The support member 72 is disposed behind the inner cover 60. The support member 72 is disposed in front of the housing 33. The support member 72 supports the first light guide 73, the second light guide 74, and the light source 75. The support member 72 is disposed behind the first and second light guides 73 and 74.

The support member 72 includes a first support portion 76 and a second support portion 77. The first and second support portions 76 and 77 are integrally provided. The first support portion 76 supports the first light guide 73. The second support portion 77 supports the second light guide 74. The first support portion 76 and the first light guide 73 are included in the first position light portion 37. The second support portion 77 and the second light guide 74 are included in the second position light portion 38.

The first and second light guides 73 and 74 are separated from each other. The first light guide 73 extends along the longitudinal direction of the first position light cover 43. The second light guide 74 extends along the longitudinal direction of the second position light cover 44. As seen in the vehicle front view, the first light guide 73 extends leftward and obliquely upward from the middle portion of the headlight unit 30. As seen in the vehicle front view, the second light guide 74 extends rightward and obliquely upward from the middle portion of the headlight unit 30. The first light guide 73 extends to a position leftward of the first headlight portion 35. In other words, as seen in the vehicle front view, an outer lateral end 731 of the first light guide 73 is located laterally outside the outer lateral end 352 of the first headlight portion 35. The second light guide 74 extends to a position rightward of the second headlight portion 36. In other words, as seen in the vehicle front view, an outer lateral end 741 of the second light guide 74 is located laterally outside the outer lateral end 362 of the second headlight portion 36.

The light source 75 is shared between the first and second position light portions 37 and 38. The light source 75 is, for instance, an LED. Alternatively, the light source 75 may be a light bulb. The light source 75 is disposed between the first and second light guides 73 and 74. The light source 75 is disposed in opposition to one end of the first light guide 73. The light source 75 is disposed in opposition to one end of the second light guide 74. The first and second light guides 73 and 74 are each made of, for instance, resin such as acrylic resin. The first and second light guides 73 and 74 are each processed to reflect light in the interior thereof. The first light guide 73 entirely emits light, while guiding light emitted from the light source 75 in the longitudinal direction of the first light guide 73. The second light guide 74 entirely emits light, while guiding the light emitted from the light source 75 in the longitudinal direction of the second light guide 74.

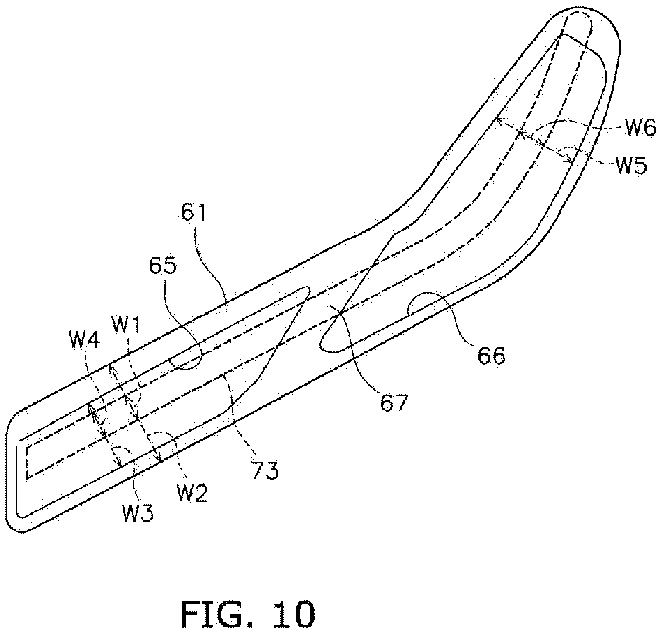

As shown in FIGS. 6 and 7, the first light diffuser 61 is disposed in front of the first light guide 73. FIG. 10 is a front view of the first light diffuser 61 and the first light guide 73. As seen in the vehicle front view shown in FIG. 10, the first light diffuser 61 overlaps the first light guide 73. As seen in the vehicle front view, the first light diffuser 61 overlaps the entirety of the first light guide 73. Alternatively, as seen in the vehicle front view, the first light diffuser 61 may overlap part of the first light guide 73.

The first light guide 73 is shaped to be narrower than the first light diffuser 61. In other words, the first light diffuser 61 has a width W2 greater than a width W1 of the first light guide 73. It should be noted that the term "width" means a dimension in a perpendicular direction to a tangent line of the upper or lower edge of the first light diffuser 61 as seen in the vehicle front view. Alternatively, the term "width" may mean a dimension in a perpendicular direction to a tangent line of the upper or lower edge of the first light guide 73 as seen in the vehicle front view. Yet alternatively, the term "width" may mean a dimension in the vehicle up-and-down direction as seen in the vehicle front view. The first light guide 73 has a width W4 less than a width W3 of the first inner opening 65 at least in a range thereof overlapping the first inner opening 65. The first light guide 73 has a width W6 less than a width W5 of the first outer opening 66 at least in a range overlapping the first outer opening 66.

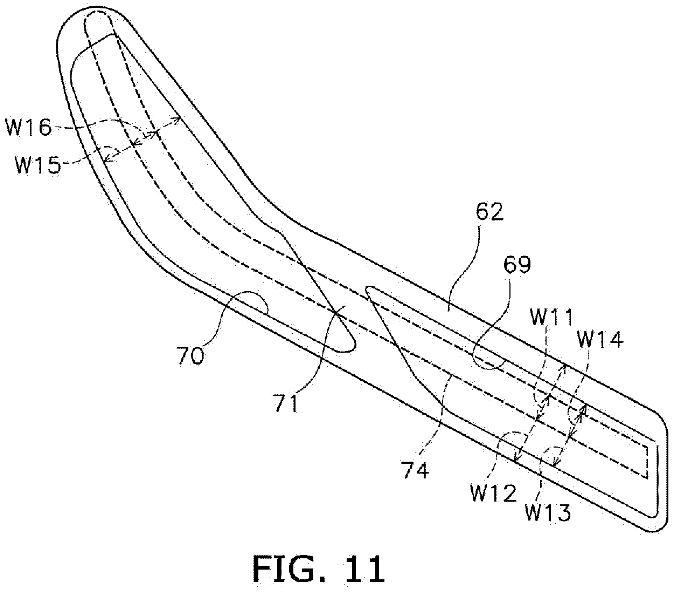

The second light diffuser 62 is disposed in front of the second light guide 74. FIG. 11 is a front view of the second light diffuser 62 and the second light guide 74. As seen in the vehicle front view shown in FIG. 11, the second light diffuser 62 overlaps the second light guide 74. As seen in the vehicle front view, the second light diffuser 62 overlaps the entirety of the second light guide 74. Alternatively, as seen in the vehicle front view, the second light diffuser 62 may overlap part of the second light guide 74. The second light guide 74 is shaped to be narrower than the second light diffuser 62. In other words, the second light diffuser 62 has a width W12 greater than a width W11 of the second light guide 74. The second light guide 74 has a width W14 less than a width W13 of the second inner opening 69 at least in a range thereof overlapping the second inner opening 69. The second light guide 74 has a width W16 less than a width 15 of the second outer opening 70 at least in a range thereof overlapping the second outer opening 70.

In the straddled vehicle 1 according to the present embodiment explained above, the light emitted from the light source 75 is guided by the first light guide 73. Because of this, even when the first position light portion 37 has an elongated shape, the light source 75 is inhibited from being increased in number. Moreover, the light emitted from the first light guide 73 is diffused by the first light diffuser 61 having the greater width than the first light guide 73. Accordingly, the light source 75 and the first light guide 73 can be inhibited from being enlarged, and simultaneously, the first position light portion 37 can be enhanced in distinguishability. As is the same with the first position light portion 37, the second position light portion 38 can be also enhanced in distinguishability.

The light emitted from the first light guide 73 is diffused by the first light diffuser 61 and is then blocked at the first light shading portion 67. Because of this, as shown in FIG. 2, in lighting up the first position light portion 37, the light of the first position light portion 37 is divided right and left, while being shaded at the position of the first light shading portion 67. Accordingly, the first position light portion 37 appears as if it were composed of a plurality of lights. Because of this, the first position light portion 37 can be enhanced in distinguishability without increasing the number of light sources. As is the same with the first position light portion 37, the second position light portion 38 can be also enhanced in distinguishability.

One embodiment of the present teaching has been explained above. However, the present teaching is not limited to the embodiment described above, and a variety of changes can be made within the scope of the appended claims.

The straddled vehicle 1 is not limited to the scooter-type vehicle, and alternatively, may be another type of vehicle such as a moped. The structure of the straddled vehicle 1 is not limited to that in the embodiment described above and may be changed. For example, the straddled vehicle 1 may have a structure with a flat footboard provided between the seat 5 and the leg shield 22. The flat footboard may be entirely flat in the right-and-left direction of the straddled vehicle 1.

The number of front wheels is not limited to one, and alternatively, may be greater than one. The number of rear wheels is not limited to one, and alternatively, may be greater than one. The structure of the vehicle body frame 2 is not limited to that in the embodiment described above and may be changed. For example, the shape of the down frame 12, the lower frame 13, or the rear frame 14 may be changed. The structure of the front cover 21 is not limited to that in the embodiment described above and may be changed.

The structure of the headlight unit 30 is not limited to that in the embodiment described above and may be changed. For example, in the headlight portion 31, the layout of the high-beam lights and the low-beam lights may be changed from that described above. The clear cover 34 is not limited to an integrated member. The housing 33 is not limited to an integrated member, and alternatively, may be divided into a plurality of members. The first and second cover portions 63 and 64 may be separated from each other. The first and second support portions 76 and 77 may be separated from each other.

The structure of the position light portion 32 is not limited to that in the embodiment described above and may be changed. For example, the shape or layout of the first light diffuser 61 and the first light guide 73 may be changed. The shape or layout of the second light diffuser 62 and the second light guide 74 may be changed. The light source 75 may not be shared between the first position light portion 37 and the second position light portion 38. A light source may be provided for each of the first and second position light portions 37 and 38. The shape or layout of the first and second light shading portions 67 and 71 may be changed. Alternatively, the first and second light shading portions 67 and 71 may be omitted.

### REFERENCE SIGNS LIST

- 3: Steering device
- 4: Front wheel
- 11: Head pipe
- 21: Front cover
- 30: Headlight unit
- 31: Headlight portion
- 33: Housing
- 34: Clear cover
- 35: First headlight portion
- 36: Second headlight potion
- 37: First position light portion
- 45: First inner light
- 46: First outer light
- 47: Second inner light
- 48: Second outer light
- 61: First light diffuser
- 62: Second light diffuser
- 67: First light shading portion
- 75: Light source
- 73: First light guide
- 74: Second light guide

## Claims

1. A straddled vehicle (1) comprising:
a head pipe (11);
a steering device (3) turnably supported by the head pipe (11);
a front wheel (4) rotatably supported by the steering device (3);
a front cover (21) disposed in front of the head pipe (11); and
a headlight unit (30) disposed in the front cover (21), wherein
the headlight unit (30) includes
a headlight portion (31),
a first position light portion (37),
a housing (33) holding the headlight portion (31) and the first position light portion (37), and
a clear cover (34) disposed in front of the headlight portion (31) and the first position light portion (37) with regard to a front-and-rear direction of the vehicle, the clear cover (34) allowing light to transmit therethrough,
the first position light portion (37) is disposed above the headlight portion (31) with regard to an up-and-down direction of the vehicle, and
the first position light portion (37) includes
a light source,
a first light guide (73) disposed behind the clear cover (34) with regard to the front-and-rear direction of the vehicle, the first light guide (73) extending along a longitudinal direction of the clear cover (34), the first light guide (73) guiding light emitted from the light source, and
a first light diffuser (61) disposed behind the clear cover with regard to the front-and-rear direction of the vehicle, the first light diffuser (61) extending along the longitudinal direction of the clear cover (34), **characterised by**
the first light diffuser being disposed in front of the first light guide (73) and the first light diffuser (61) having a greater width than the first light guide (73).

2. The straddled vehicle (1) according to claim 1, wherein the first position light portion (37) further includes a first light shading portion (67) dividing right and left the first light diffuser (61) with regard to a right-and-left direction of the vehicle.

3. The straddled vehicle (1) according to claim 1 or 2, wherein the first position light portion (37) adjoins an upper edge of the headlight portion (31) with regard to the up-and-down direction of the vehicle.

4. The straddled vehicle (1) according to any of claims 1 to 3, wherein the headlight portion (31) includes
a first headlight portion (35) extending leftward with regard to the right-and-left direction of the vehicle and obliquely upward with regard to the up-and-down direction of the vehicle from a middle portion of the front cover (21), and
a second headlight portion (36) extending rightward with regard to the right-and-left direction of the vehicle and obliquely upward with regard to the up-and-down direction of the vehicle from the middle portion of the front cover (21),
the first position light portion (37) is disposed above the first headlight portion (35) with regard to the up-and-down direction of the vehicle, and
the headlight unit (30) further includes a second position light portion (38) disposed above the second headlight portion (36) with regard to the up-and-down direction of the vehicle.

5. The straddled vehicle (1) according to claim 4, wherein the second position light portion (38) includes
a second light guide (74) disposed behind the clear cover (34) with regard to the front-and-rear direction of the vehicle, the second light guide (74) extending along the longitudinal direction of the clear cover (34), and
a second light diffuser (62) disposed behind the clear cover (34) and in front of the second light guide (74) with regard to the front-and-rear direction of the vehicle, the second light diffuser (62) extending along the longitudinal direction of the clear cover (34), the second light diffuser (62) having a greater width than the second light guide (74).

6. The straddled vehicle (1) according to claim 5, wherein the second position light portion (38) further includes a second light shading portion (71) dividing right and left the second light diffuser (62) with regard to the right-and-left direction of the vehicle.

7. The straddled vehicle (1) according to claim 5 or 6, wherein the second position light portion (38) adjoins an upper edge of the headlight portion (31) with regard to the up-and-down direction of the vehicle.

8. The straddled vehicle (1) according to any of claims 5 to 7, wherein the light source is disposed between the first light guide (73) and the second light guide (74) with regard to the right-and-left direction of the vehicle.

9. The straddled vehicle (1) according to any of claims 4 to 8, wherein the first headlight portion (35) includes
a first inner light (45) including a first inner light source (49), and
a first outer light (46) including a first outer light source (50), the first outer light (46) disposed on a left side of the first inner light (45),
the second headlight portion (36) includes
a second inner light (47) including a second inner light source (51), and
a second outer light (48) including a second outer light source (52), the second outer light (48) disposed on a right side of the second inner light (47) with regard to the right-and-left direction of the vehicle.

10. The straddled vehicle (1) according to claim 9, wherein the first inner light (45) and
the second inner light (47) are low-beam lights, and
the first outer light (46) and the second outer light (48) are high-beam lights.

## Patentansprüche

1. Ein Spreiz-Sitz-Fahrzeug (1), das umfasst:
ein Kopf-Rohr (11);
eine Lenk-Vorrichtung (3), die drehbar durch das Kopf-Rohr (11) gelagert ist;
ein Vorder-Rad (4), das drehbar durch die Lenk-Vorrichtung (3) gelagert ist;
eine Front-Abdeckung (21), die vor dem Kopf-Rohr (11) angeordnet ist; und
eine Scheinwerfer-Einheit (30), die in der Front-Abdeckung (21) angeordnet ist, wobei die Scheinwerfer-Einheit (30) beinhaltet
einem Scheinwerfer-Abschnitt (31),
einem ersten Positions-Licht-Abschnitt (37),
ein Gehäuse (33), das den Scheinwerfer-Abschnitt (31) und den ersten Positions-Licht-Abschnitt (37) hält, und
eine durchsichtige Abdeckung (34), die vor dem Scheinwerfer-Abschnitt (31) und dem ersten Positions-Licht-Abschnitt (37) in Bezug auf eine Vorwärts-und-Rückwärts-Richtung des Fahrzeugs angeordnet ist, die durchsichtige Abdeckung (34) gestattet es Licht hindurch zu treten,
der erste Positions-Licht-Abschnitt (37) ist oberhalb des Scheinwerfer-Abschnitts (31) angeordnet in Bezug auf eine Auf-und-Abwärts-Richtung des Fahrzeugs, und
der erste Positions-Licht-Abschnitt (37) beinhaltet
eine Lichtquelle,
eine erste Licht-Führung (73), die in Bezug auf die Vorwärts-und-Rückwärts-Richtung des Fahrzeugs hinter der durchsichtigen Abdeckung (34) angeordnet ist, die erste Licht-Führung (73) erstreckt sich entlang einer Längsrichtung der durchsichtigen Abdeckung (34), die erste Licht-Führung (73) führt Licht, das von der Lichtquelle emittiert ist, und
einen ersten Licht-Diffusor (61), der hinter der durchsichtigen Abdeckung in Bezug auf die Vorwärts-und-Rückwärts-Richtung des Fahrzeugs angeordnet ist, der erste Licht-Diffusor (61) erstreckt sich entlang der Längsrichtung der durchsichtigen Abdeckung (34), **gekennzeichnet durch** den ersten Licht-Diffusor (61), der vor der erste Licht-Führung (73) angeordnet ist, der erste Licht-Diffusor (61) hat eine größere Breite als die erste Licht-Führung (73).

2. Das Spreiz-Sitz-Fahrzeug (1) gemäß Anspruch 1, wobei der erste Positions-Licht-Abschnitt (37) weiterhin einen ersten Licht-Abschattungs-Abschnitt (67) beinhaltet, der den ersten Licht-Diffusor (61) in Bezug auf eine Rechts-Links-Richtung des Fahrzeugs rechts und links teilt.

3. Spreiz-Sitz-Fahrzeug (1) gemäß Anspruch 1 oder 2, wobei der erste Positions-Licht-Abschnitt (37) an eine Oberkante des Scheinwerfer-Abschnitts (31) in Bezug auf die Auf-und-Abwärts-Richtung des Fahrzeugs angrenzt.

4. Das Spreiz-Sitz-Fahrzeug (1) gemäß irgendeinem der Ansprüche 1 bis 3, wobei der Scheinwerfer-Abschnitt (31) beinhaltet
einen ersten Scheinwerfer-Abschnitt (35), der sich in Bezug auf die Rechts-Links-Richtung des Fahrzeugs nach links und in Bezug auf die Oben-Unten-Richtung des Fahrzeugs von einem mittleren Abschnitt der Front-Abdeckung (21) schräg nach oben erstreckt, und
einen zweiten Scheinwerfer-Abschnitt (36), der sich in Bezug auf die Rechts-Links-Richtung des Fahrzeugs nach rechts und in Bezug auf die Oben-Unten-Richtung des Fahrzeugs von dem mittleren Abschnitt der Front-Abdeckung (21) schräg nach oben erstreckt,
der erste Positions-Licht-Abschnitt (37) in Bezug auf die Auf-und-Abwärts-Richtung des Fahrzeugs oberhalb des ersten Scheinwerfer-Abschnitts (35) angeordnet ist, und die Scheinwerfer-Einheit (30) weiterhin einen zweiten Positions-Licht-Abschnitt (38) beinhaltet, der in Bezug auf die Auf-und-Abwärts-Richtung des Fahrzeugs oberhalb des zweiten Scheinwerfer-Abschnitts (36) angeordnet ist.

5. Das Spreiz-Sitz-Fahrzeug (1) gemäß Anspruch 4, wobei der zweite Positions-Licht-Abschnitt (38) beinhaltet
eine zweite Licht-Führung (74), die in Bezug auf die Vorwärts-und-Rückwärts-Richtung des Fahrzeugs hinter der durchsichtigen Abdeckung (34) angeordnet ist, die zweite Licht-Führung (74) erstreckt sich entlang der Längsrichtung der durchsichtigen Abdeckung (34), und
einen zweiten Licht-Diffusor (62), der hinter der durchsichtigen Abdeckung (34) und vor der zweiten Licht-Führung (74) in Bezug auf die Vorwärts-und-Rückwärts-Richtung des Fahrzeugs angeordnet ist, der zweite Licht-Diffusor (62) erstreckt sich entlang der Längsrichtung der durchsichtigen Abdeckung (34), der zweite Licht-Diffusor (62) hat eine größere Breite als die zweite Licht-Führung (74).

6. Das Spreiz-Sitz-Fahrzeug (1) gemäß Anspruch 5, wobei der zweite Positions-Licht-Abschnitt (38) weiterhin einen zweiten Licht-Abschattungs-Abschnitt (71) beinhaltet, der den zweiten Licht-Diffusor (62) in Bezug auf die Rechts- und Linksrichtung des Fahrzeugs rechts und links teilt.

7. Das Spreiz-Sitz-Fahrzeug (1) gemäß Anspruch 5 oder 6, wobei der zweite Positions-Licht-Abschnitt (38) an eine Oberkante des Scheinwerfer-Abschnitts (31) in Bezug auf die Auf-und-Abwärts-Richtung des Fahrzeugs angrenzt.

8. Das Spreiz-Sitz-Fahrzeug (1) gemäß irgendeinem der Ansprüche 5 bis 7, wobei die Lichtquelle zwischen der ersten Licht-Führung (73) und der zweiten Licht-Führung (74) in Bezug auf die Rechts-Links-Richtung des Fahrzeugs angeordnet ist.

9. Das Spreiz-Sitz-Fahrzeug (1) gemäß irgendeinem der Ansprüche 4 bis 8, wobei der erste Scheinwerfer-Abschnitt (35) beinhaltet
eine erste innere Leuchte (45), die eine erste innere Lichtquelle (49) beinhaltet, und eine erste äußere Leuchte (46), die eine erste äußeren Lichtquelle (50) beinhaltet, die erste äußere Leuchte (46) ist auf einer linken Seite der ersten inneren Leuchte (45) angeordnet,
der zweite Scheinwerfer-Abschnitt (36) beinhaltet
eine zweite innere Leuchte (47), die eine zweite innere Lichtquelle (51) beinhaltet, und
eine zweite äußere Leuchte (48), die eine zweite äußere Lichtquelle (52) beinhaltet, die zweite äußere Leuchte (48) auf einer rechten Seite der zweiten inneren Leuchte (47) in Bezug auf die Rechts-Links-Richtung des Fahrzeugs angeordnet ist.

10. Das Spreiz-Sitz-Fahrzeug (1) gemäß Anspruch 9, wobei die erste innere Leuchte (45) und die zweite innere Leuchte (47) Abblendlichter sind, und
die erste äußere Leuchte (46) und die zweite äußere Leuchte (48) Fernlichter sind.

## Revendications

1. Véhicule à enfourcher (1) comprenant :
un tube de tête (11) ;
un dispositif de direction (3) supporté de manière tournante par le tube de tête (11) ;
une roue avant (4) supportée de manière rotative par le dispositif de direction (3) ;
un carénage avant (21) disposé devant le tube de tête (11) ; et
une unité de phare (30) disposée dans le carénage avant (21), dans lequel l'unité de phare (30) comprend
une portion de phare (31),
une première portion de feu de position (37),
un boîtier (33) contenant la portion de phare (31) et la première portion de feu de position (37), et
un carénage translucide (34) disposé devant la portion de phare (31) et la première portion de feu de position (37) en direction avant-arrière du véhicule, le carénage translucide (34) laissant passer la lumière,
la première portion de feu de position (37) est disposée au-dessus de la portion de phare (31) en direction haut-bas du véhicule, et
la première portion de feu de position (37) comprend une source de lumière,
un premier guide de lumière (73) disposé derrière le carénage translucide (34) en direction avant-arrière du véhicule, le premier guide de lumière (73) s'étendant en direction longitudinale du carénage translucide (34), le premier guide de lumière (73) guidant la lumière émise par la source de lumière, et
un premier diffuseur de lumière (61) disposé derrière le carénage translucide en direction avant-arrière du véhicule, le premier diffuseur de lumière (61) s'étendant en direction longitudinale du carénage translucide (34),
**caractérisé en ce que** le premier diffuseur de lumière est disposé devant le premier guide de lumière (73) et la largeur du premier diffuseur de lumière (61) est supérieure à celle du premier guide de lumière (73).

2. Véhicule à enfourcher (1) selon la revendication 1, dans lequel la première portion de feu de position (37) comprend en outre une première portion de masquage de lumière (67) qui divise en une partie gauche et une partie droite le premier diffuseur de lumière (61) en direction gauche-droite du véhicule.

3. Véhicule à enfourcher (1) selon la revendication 1 ou 2, dans lequel la première portion de feu de position (37) rejoint un bord supérieur de la portion de phare (31) en direction haut-bas du véhicule.

4. Véhicule à enfourcher (1) selon l'une quelconque des revendications 1 à 3, dans lequel la portion de phare (31) comprend
une première portion de phare (35) qui s'étend vers la gauche en direction gauche-droite du véhicule et obliquement vers le haut en direction haut-bas du véhicule depuis une portion médiane du carénage avant (21), et
une deuxième portion de phare (36) qui s'étend vers la droite en direction gauche-droite du véhicule et obliquement vers le haut en direction haut-bas du véhicule depuis la portion médiane du carénage avant (21),
la première portion de feu de position (37) est disposée au-dessus de la première portion de phare (85) en direction haut-bas du véhicule, et
l'unité de phare (30) comprend en outre une deuxième portion de feu de position (38) disposée au-dessus de la deuxième portion de phare (36) en direction haut-bas du véhicule.

5. Véhicule à enfourcher (1) selon la revendication 4, dans lequel la deuxième portion de feu de position (38) comprend
un deuxième guide de lumière (74) disposé derrière le carénage translucide (34) en direction avant-arrière du véhicule, le deuxième guide de lumière (74) s'étendant en direction longitudinale du carénage translucide (34), et
un deuxième diffuseur de lumière (62) disposé derrière le carénage translucide (34) et devant le deuxième guide de lumière (74) en direction avant-arrière du véhicule, le deuxième diffuseur de lumière (62) s'étendant en direction longitudinale du carénage translucide (34), la largeur du deuxième diffuseur de lumière (62) étant supérieure à celle du deuxième guide de lumière (74).

6. Véhicule à enfourcher (1) selon la revendication 5, dans lequel la deuxième portion de feu de position (38) comprend en outre une deuxième portion de masquage de lumière (71) qui divise en une partie gauche et une partie droite le deuxième diffuseur de lumière (62) en direction gauche-droite du véhicule.

7. Véhicule à enfourcher (1) selon la revendication 5 ou 6, dans lequel la deuxième portion de feu de position (38) rejoint un bord supérieur de la portion de phare (81) en direction haut-bas du véhicule.

8. Véhicule à enfourcher (1) selon l'une quelconque des revendications 5 à 7, dans lequel la source de lumière est disposée entre le premier guide de lumière (73) et le deuxième guide de lumière (74) en direction gauche-droite du véhicule.

9. Véhicule à enfourcher (1) selon l'une quelconque des revendications 4 à 8, dans lequel
la première portion de phare (35) comprend
un premier feu interne (45) comprenant une première source de lumière interne (49), et
un premier feu externe (46) comprenant une première source de lumière externe (50), le premier feu externe (46) étant disposé sur un côté gauche du premier feu interne (45),
la deuxième portion de phare (36) comprend
un deuxième feu interne (47) comprenant une deuxième source de lumière interne (51), et
un deuxième feu externe (48) comprenant une deuxième source de lumière externe (52), le deuxième feu externe (48) étant disposé sur un côté droit du deuxième feu interne (47) en direction gauche-droite du véhicule.

10. Véhicule à enfourcher (1) selon la revendication 9, dans lequel le premier feu interne (45) et le deuxième feu interne (47) sont des feux de croisement, et
le premier feu externe (46) et le deuxième feu externe (48) sont des feux de route.
